(19) Europäisches Patentamt
European Patent Office
Office européen des brevets

(11) EP 2 723 493 B2

(12) NEW EUROPEAN PATENT SPECIFICATION
After opposition procedure

(45) Date of publication and mention of the opposition decision:
**18.03.2020 Bulletin 2020/12**

(45) Mention of the grant of the patent:
**14.06.2017 Bulletin 2017/24**

(21) Application number: **12803265.3**

(22) Date of filing: **21.06.2012**

(51) Int Cl.:
*A01N 43/90* (2006.01) *A01N 33/18* (2006.01)
*A01P 13/00* (2006.01)

(86) International application number:
**PCT/US2012/043526**

(87) International publication number:
**WO 2012/177860 (27.12.2012 Gazette 2012/52)**

# (54) SYNERGISTIC HERBICIDAL COMPOSITION CONTAINING PENOXSULAM AND PENDIMETHALIN

SYNERGISTISCHE HERBIZIDZUSAMMENSETZUNG ENTHALTEND PENOXSULAM UND PENDIMETHALIN

COMPOSITION HERBICIDE SYNERGIQUE CONTENANT DU PENOXSULAM ET DE LA PENDIMÉTHALINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2011 US 201161500784 P**

(43) Date of publication of application:
**30.04.2014 Bulletin 2014/18**

(73) Proprietor: **Dow AgroSciences LLC**
**Indianapolis, IN 46268 (US)**

(72) Inventors:
- **MANN, Richard, K.**
  **Franklin, IN 46131 (US)**
- **NGUYEN, Lap**
  **Hcm City (VN)**
- **SAMANWONG, Somsak**
  **Nonthaburi 11120 (TH)**

(74) Representative: **f & e patent**
**Fleischer, Engels & Partner mbB, Patentanwälte**
**Braunsberger Feld 29**
**51429 Bergisch Gladbach (DE)**

(56) References cited:

| | |
|---|---|
| **WO-A1-2012/135441** | **CN-A- 102 342 286** |
| **CN-A- 102 342 286** | **US-A1- 2006 183 637** |
| **US-A1- 2006 183 637** | **US-A1- 2006 183 637** |
| **US-A1- 2008 153 704** | |

- **"Grasp: A VERSATILE AND RELIABLE NEW TOOL FOR RICE PROTECTION", , 11 April 2005 (2005-04-11), pages 1-11, XP055144173, Retrieved from the Internet: URL:http://msdssearch.dow.com/PublishedLiteratureDAS/dh_0058/0901b80380058345.pdf?filepath=usag/pdfs/noreg/010-31655.pdf&fromPage=GetDoc [retrieved on 2014-10-02]**
- **Si: "Specimen Label Grasp SC", , 14 May 2008 (2008-05-14), pages 1-6, XP055144358, Indianapolis, U.S.A. Retrieved from the Internet: URL:http://ws.greenbook.net/Docs/Label/L77062.pdf [retrieved on 2014-10-06]**
- **Makhteshim: "Pendimethalin 330EC label", , 19 August 2008 (2008-08-19), pages 1635-876622, XP055144424, U.K. Retrieved from the Internet: URL:http://www.mauk.co.uk/pdfs/labels/Alph a Pendimethalin web label.pdf [retrieved on 2014-10-06]**
- **ANONYMOUS: "Penoxsulam and its Use as a Herbicide in Mixtures for use in Rice, Wheat, Barley, Oats, Sorghum, Corn, Maize, IVM, Rangeland, Pastures, Grasslands, Fallowland, Turf and Aquatics", IP.COM JOURNAL, IP.COM INC., WEST HENRIETTA, NY, US, 30 March 2005 (2005-03-30), XP013024048, ISSN: 1533-0001**
- **GRASP S.C.: 'Versatile and Reliable New Tool for Rice Protection' DOW AGROSCIENCES 2008, XP055143587 Retrieved from the Internet: <URL:http://www.dowagro.com/PublishedLiterature/dh_00dc/0901b803800dcdd2.pdP?filepath=usag/pdfs/noreg/010-31598.pdf&fromPage=GetDoc> [retrieved on 2012-08-13]**

EP 2 723 493 B2

- Anonymous: "STOMP® AQUA + FALKONO-BASF PACK Gebrauchshinweise", BASF, 17 June 2011 (2011-06-17),
- Anonym: "Pflanzenschutzmittel Blatt- und BASF Spurennahrstoffdunger", Stomp Aqua, 2008, pages 541-561,
- "Gebrauchsanleitung FALKON", Dow Agro Sciences, 29 July 2009 (2009-07-29),
- "Ungras- und Unkrautbekampfung in Getreide im Herbst", BASF-Kulturenratgeber Sommer/Herbst 2011, pages 8-13, BASF Rheinland
- "Geben Sie resistenten Grasern keine Chance!", Top agar, pages 62-71, Munster / German
- "Ungras- und Unkrautbekampfung in Getreide im Herbst", Kulturenratgeber, 2010, pages 15-18,
- "Pflanzenschutzdienst Jahresbericht", Landwirtschaftskammer Nordrhein-Westfalen, 2010, pages 104-107,
- "Malibu", Pflanzenschutzmittel Blatt- und Spurennahrstoffdunger, 2008, pages 363-369,
- Anonym: "Keine Chance fur Ungraser in Getreide!", Top agar Top agar, pages 54-59, [retrieved on 2018-05-04]
- R.B. LANGSTON et al.: "Penoxsulam: A New Herbicide for rice in the Southern U.S.", Southern Weed Science Society, vol. 57, 2004, page 69,
- J.S. RICHBURG et al.: "Weed Control Spectrum of Penoxsulam in Southern U.S. Rice", 2005 Proceedings, Southern Weed Science Society, vol. 58, 2005, page 268,
- "Grasp SC EPA Registration No 062719-00500 dated U.S. Environmental", Protection Agency, 28 October 2004 (2004-10-28),
- Mueller, T.C. et al: Weed Science, vol. 38, no. 2, 1990, pages 103-107,
- Search results obtained for the term 'Ackerfuchsschwanz' in the EPO global database
- Copy of a letter from the Landwirtschaftskammer Nordrhein-Westfalen dated 25 February 2019
- "Ratgeber Pflanzenbau und Pflanzenschutz, Landwirtschaftskammer Nordrhein-Westphalen", 2011 pages 198-201,
- Press release of the Landwirtschaftskammer Nordrhein-Westphalen, 12 January 2011 (2011-01-12),
- Extract from Wikipedia 'Zurückgebogener Amarant'

## Description

### Cross Reference to Related Applications

This Application claims the benefit of U.S. provisional application 61/500,784 filed on June 24, 2011.

### Field

This invention concerns a synergistic herbicidal composition consisting of a herbicidally effective amount of (a) penoxsulam and (b) pendimethalin and optionally at least one agriculturally acceptable adjuvant or carrier; one or more surface-active agents; herbicide safeners; plant growth regulants; fungicides; insecticides, wherein the weight ratio of pendimethalin to penoxsulam on an active ingredient (ai) basis is between 320:1 and 5:1, for controlling growth of undesirable vegetation, particularly in multiple crops, including rice, cereal and grain crops, turf, industrial vegetation management (IVM), sugar cane and tree and vine orchards.

### Background

The protection of crops from weeds and other vegetation which inhibit crop growth is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use.

For instance, US 2006/0183637 A1 relates to the use of penoxsulam in controlling broadleaf weeds and sedges in tufgrass, vine and orchard floors. Said document also discloses the possibility of applying penoxsulam with various other herbicides, among others, pendimethalin, in order to obtain control of a wider variety of undesirable vegetation. Formulations comprising penoxsulam are commercially available from Dow AgroSciences under the trademark name Grasp® SC. According to its specimen label and the product information sheet entitled "A versatile and reliable new tool for rice protection", available on the manufacturer’s website, Grasp® SC may be tank-mixed with labeled rates of, among others, pendimethalin.

In some cases, herbicidal active ingredients have been shown to be more effective in combination than when applied individually and this is referred to as "synergism." As described in the Herbicide Handbook of the Weed Science Society of America, Ninth Edition, 2007, p. 429, "’synergism’ [is] an interaction of two or more factors such that the effect when combined is greater than the predicted effect based on the response to each factor applied separately." The present invention is based on the discovery that pendimethalin and penoxsulam, already known individually for their herbicidal efficacy, display a synergistic effect when applied in combination.

### Summary

The present invention concerns a synergistic herbicidal composition consisting of a herbicidally effective amount of (a) penoxsulam and (b) pendimethalin and optionally at least one agriculturally acceptable adjuvant or carrier; one or more surface-active agents; herbicide safeners; plant growth regulants; fungicides; insecticides, wherein the weight ratio of pendimethalin to penoxsulam on an active ingredient (ai) basis is between 320:1 and 5:1.

The present invention also concerns a method of controlling the growth of undesirable vegetation in multiple crops, including rice, cereal and grain crops, turf, IVM, sugar cane and tree and vine orchards, and the use of this synergistic composition.

### Detailed Description of the Invention

Penoxsulam is the common name for (2-(2,2-difluoroethoxy)-*N*-(5,8-dimethoxy-[1,2,4]triazolo[1,5-*c*]pyrimidin-2-yl)-6-(trifluoromethyl)benzenesulfonamide. Its structure is

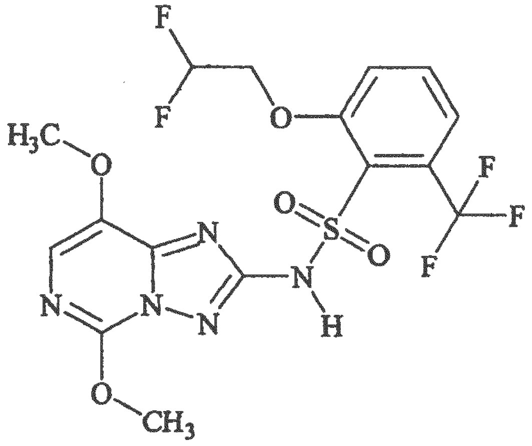

Its herbicidal activity is described in The Pesticide Manual, Fifteenth Edition, 2009. Penoxsulam controls barnyard grass, as well as many broadleaf and sedge weeds in rice, turf, tree nut and vineyard crops, cereal and grain crops, and IVM.

Pendimethalin is the common name for *N*-(1-ethylpropyl)-3,4-dimethyl-2,6-dinitrobenzenamine. Its structure is:

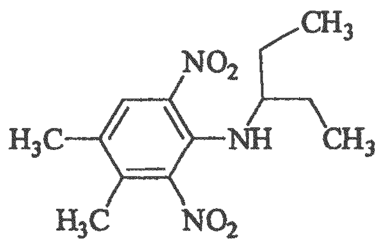

Its herbicidal activity is described in The Pesticide Manual, Fifteenth Edition, 2009. Pendimethalin controls most annual grasses and many annual broadleaf weeds in a variety of crops.

The term herbicide is used herein to mean an active ingredient that kills, controls or otherwise adversely modifies the growth of plants. An herbicidally effective or vegetation controlling amount is an amount of active ingredient which causes an adversely modifying effect and includes deviations from natural development, killing, regulation, desiccation, retardation, and the like. The terms plants and vegetation include germinant seeds, emerging seedlings, plants emerging from vegetative propagules, and established vegetation.

Herbicidal activity is exhibited by the compounds of the synergistic composition when they are applied directly to the plant or to the locus of the plant at any stage of growth or before planting or emergence. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted as is known in the art to promote non-selective or selective herbicidal action. Generally, it is preferred to apply the composition of the present invention preemergence to early postemergence to relatively immature undesirable vegetation to achieve the maximum control of weeds.

In the composition of this invention, the active ingredient ratio (weight-to-weight, wt:wt) of pendimethalin to penoxsulam at which the herbicidal effect is synergistic lies within the range of between about 5:1 and 320:1, and in certain embodiments, a ratio of about 55:1.

The rate at which the synergistic composition is applied will depend upon the particular type of weed to be controlled, the degree of control required, and the timing and method of application. In some embodiments, the composition of the invention can be applied at an application rate of between about 160 grams active ingredient per hectare (gai/ha) and about 1850 gai/ha based on the total amount of active ingredients in the composition. In certain embodiments, an application rate between about 760 gai/ha and about 1800 gai/ha is preferred. In some embodiments, pendimethalin is applied at a rate between about 150 gai/ha and about 1500 gai/ha, and penoxsulam is applied at a rate between about 10 gai/ha and about 50 gai/ha.

The synergistic composition of the present invention can additionally be employed to control undesirable vegetation in many crops that have been made tolerant to or resistant to them or to other herbicides by genetic manipulation or by mutation and selection.

The synergistic composition of the present invention can generally be employed in combination with known

herbicide safeners, such as benoxacor, benthiocarb, brassinolide, cloquintocet (mexyl), cyometrinil, cyprosulfamate, daimuron, dichlormid, dicyclonon, dietholate, dimepiperate, disulfoton, fenchlorazole-ethyl, fenclorim, flurazole, fluxofenim, furilazole, harpin proteins, isoxadifen-ethyl, mefenpyr-diethyl, mephenate, MG 191, MON 4660, naphthalic anhydride (NA), oxabetrinil, R29148 and *N*-phenyl-sulfonylbenzoic acid amides, to enhance their selectivity.

In practice, it is preferable to use the synergistic composition of the present invention in mixtures containing an herbicidally effective amount of the herbicidal components along with at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with herbicidal components or other composition ingredients. Such mixtures can be designed for application directly to weeds or their locus or can be concentrates or formulations that are normally diluted with additional carriers and adjuvants before application. They can be solids, such as, for example, dusts, granules, water dispersible granules, or wettable powders, or liquids, such as, for example, emulsifiable concentrates, solutions, emulsions or suspensions.

Suitable agricultural adjuvants and carriers that are useful in preparing the herbicidal mixtures of the invention are well known to those skilled in the art. Some of these adjuvants include, but are not limited to, crop oil concentrate (mineral oil (85%) + emulsifiers (15%)); nonylphenol ethoxylate; benzylcocoalkyldimethyl quaternary ammonium salt; blend of petroleum hydrocarbon, alkyl esters, organic acid, and anionic surfactant; $C_9$-$C_{11}$ alkylpolyglycoside; phosphated alcohol ethoxylate; natural primary alcohol ($C_{12}$-$C_{16}$) ethoxylate; di-*sec*-butylphenol EO-PO block copolymer; polysiloxane-methyl cap; nonylphenol ethoxylate + urea ammonium nitrate; emulsified methylated seed oil; tridecyl alcohol (synthetic) ethoxylate (8EO); tallow amine ethoxylate (15 EO); PEG(400) dioleate-99.

Liquid carriers that can be employed include water and organic solvents. The organic solvents typically used include, but are not limited to, petroleum fractions or hydrocarbons such as mineral oil, aromatic solvents, paraffinic oils, and the like; vegetable oils such as soybean oil, rapeseed oil, olive oil, castor oil, sunflower seed oil, coconut oil, corn oil, cottonseed oil, linseed oil, palm oil, peanut oil, safflower oil, sesame oil, tung oil and the like; esters of the above vegetable oils; esters of monoalcohols or dihydric, trihydric, or other lower polyalcohols (4-6 hydroxy containing), such as 2-ethyl hexyl stearate, *n*-butyl oleate, isopropyl myristate, propylene glycol dioleate, di-octylsuccinate, di-butyl adipate, di-octyl phthalate and the like; esters of mono, di and polycarboxylic acids and the like. Specific organic solvents include toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, *N*-methyl-2-pyrrolidinone, *N,N*-dimethyl alkylamides, dimethyl sulfoxide, liquid fertilizers and the like. Water is generally the carrier of choice for the dilution of concentrates.

Suitable solid carriers include talc, pyrophyllite clay, silica, attapulgus clay, kaolin clay, kieselguhr, chalk, diatomaceous earth, lime, calcium carbonate, bentonite clay, Fuller's earth, cottonseed hulls, wheat flour, soybean flour, pumice, wood flour, walnut shell flour, lignin, and the like.

It is usually desirable to incorporate one or more surface-active agents into the compositions of the present invention. Such surface-active agents are advantageously employed in both solid and liquid compositions, especially those designed to be diluted with carrier before application. The surface-active agents can be anionic, cationic or nonionic in character and can be employed as emulsifying agents, wetting agents, suspending agents, or for other purposes. Surfactants conventionally used in the art of formulation and which may also be used in the present formulations are described, *inter alia,* in "McCutcheon's Detergents and Emulsifiers Annual," MC Publishing Corp., Ridgewood, New Jersey, 1998 and in "Encyclopedia of Surfactants," Vol. I-III, Chemical Publishing Co., New York, 1980-81. Typical surface-active agents include salts of alkyl sulfates, such as diethanolammonium lauryl sulfate; alkylarylsulfonate salts, such as calcium dodecylbenzenesulfonate; alkylphenol-alkylene oxide addition products, such as nonylphenol-$C_{18}$ ethoxylate; alcohol-alkylene oxide addition products, such as tridecyl alcohol-$C_{16}$ ethoxylate; soaps, such as sodium stearate; alkylnaphthalene-sulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; salts of mono- and dialkyl phosphate esters; vegetable or seed oils such as soybean oil, rapeseed/canola oil, olive oil, castor oil, sunflower seed oil, coconut oil, corn oil, cottonseed oil, linseed oil, palm oil, peanut oil, safflower oil, sesame oil, tung oil and the like; and esters of the above vegetable oils, particularly methyl esters.

Oftentimes, some of these materials, such as vegetable or seed oils and their esters, can be used interchangeably as an agricultural adjuvant, as a liquid carrier or as a surface active agent.

Other adjuvants commonly used in agricultural compositions include compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, plant growth regulants, fungicides, insecticides, and the like.

The concentration of the active ingredients in the synergistic composition of the present invention is generally from 0.001 to 98 percent by weight. Concentrations from 0.01 to 90 percent by weight are often employed. In compositions designed to be employed as concentrates, the active ingredients are generally present in a concentration from 1 to 98 weight percent, preferably 2 to 90 weight percent. Such compositions are typically diluted with an inert carrier, such as water, before application. The diluted compositions usually applied to weeds or the locus of weeds generally contain 0.0001 to 1 weight percent active ingredient and preferably contain 0.001 to 0.05 weight percent.

The present compositions can be applied to weeds or their locus by the use of conventional ground or aerial dusters, sprayers, and granule applicators, by addition to irrigation water, and by other conventional means known to those skilled in the art.

The following examples illustrate the present invention.

Examples

Evaluation of Preemergence Herbicidal Activity of Mixtures under Field Conditions

Methodology

Field trials were conducted in rice and tree crops using standard herbicide small plot research methodology. Plot size was typical for small plot research, varying from 2 to 4 meters (m) wide by 6.7 to 10 meters long. There were 3 to 4 replicates per treatment. Soil types ranged from medium to fine soil texture. Rice or cereal crops were sown by mechanical direct dry seeding as per normal local cultural practices. The rice or cereal crop was grown using normal cultural practices for fertilization, watering, flooding and maintenance to ensure good growth of the crop and the weeds.

Treatments were applied by backpack sprayer using either compressed air or $CO_2$, at spray pressures from 124 to 276 kilopascals (kPa). Spray tips were typically Flat Fan Teejet nozzles, such as TJ8002 to TJ110015 or XR11001. Spray volumes varied from 93.5 to 250 liters per hectare (L/ha). Penoxsulam was applied as the commercial products Grasp SC (240 gr ai/L) or Clipper 20 OD (20 grams ai/L); pendimethalin was applied as the commercial product Prowl EC.

For each treatment, the appropriate formulated product amount to treat the plot area, to achieve the desired application rate, based on unit area of application (hectare), was calculated, measured, and mixed in water prior to applying with the backpack sprayer. Treatments were rated as compared to the untreated control plots.

Evaluation

The treated plots and control plots were rated blind at various intervals after application. Ratings were based of Percent (%) Visual weed control, where 0 corresponds to no injury and 100 corresponds to complete kill.

Data were collected for all trials and analyzed using various statistical methods.

Colby's equation was used to determine the herbicidal effects expected from the mixtures (Colby, S. R. Calculation of the synergistic and antagonistic response of herbicide combinations. Weeds 1967, 15, 20-22).

The following equation was used to calculate the expected activity of mixtures containing two active ingredients, A and B:

$$\text{Expected} = A + B - (A \times B/100)$$

A = observed efficacy of active ingredient A at the same concentration as used in the mixture;

B = observed efficacy of active ingredient B at the same concentration as used in the mixture.

The results are summarized in Tables 1 through 3.

Table1. Synergistic broadleaf weed control at 22 to 54 days after application from Penoxsulam + Pendimethalin applied preemergence to seeded rice - Field trials.

| | | % Visual Control | | | | | |
|---|---|---|---|---|---|---|---|
| Application Rate (gai/ha) | | ALRPH | | IPOSS | | SEBEX | |
| Penoxsulam | Pendimethalin | Obs | *Ex* | Obs | *Ex* | Obs | *Ex* |
| 20 (1) | 0 | 43 | - | - | - | - | - |

(continued)

| | | % Visual Control | | | | | |
|---|---|---|---|---|---|---|---|
| Application Rate (gai/ha) | | ALRPH | | IPOSS | | SEBEX | |
| Penoxsulam | Pendimethalin | Obs | *Ex* | Obs | *Ex* | Obs | *Ex* |
| 0 | 1100 | 0 | - | - | - | - | - |
| 20 | 1100 | 76 | *43* | - | - | - | - |
| 20 (2) | 0 | 74 | - | 21 | - | - | - |
| 0 | 1100 | 0 | - | 35 | - | - | - |
| 20 | 1100 | 100 | *74* | 83 | *49* | - | - |
| 40 | 0 | - | - | - | - | 40 | - |
| 0 | 1100 | - | - | - | - | 14 | - |
| 40 | 1100 | - | - | - | - | 86 | *47* |

(1) = Arkansas, USA
(2) = Texas, USA
ALRPH = *Alternanthera philoxeroides* (alligatorweed)
IPOSS = *Ipomoea* spp. (morningglory)
SEBEX = *Sesbania exaltata* (hemp sesbania/coffeeweed)
Obs = Observed results
Ex = Expected results
gai/ha = grams of active ingredient per hectare

Table 2. Synergistic grass weed control at 60 days after application from Penoxsulam + Pendimethalin applied preemergence to seeded rice - Field trials.

| | | % Visual Control | | | |
|---|---|---|---|---|---|
| Application Rate (gai/ha) | | ECHCO | | ISCRU | |
| Penoxsulam | Pendimethalin | Obs | *Ex* | Obs | *Ex* |
| 20 | 0 | 25 | - | - | - |
| 0 | 750 | 55 | - | - | - |
| 20 | 750 | 93 | *66* | - | - |
| 30 | 0 | - | - | 35 | - |
| 0 | 750 | - | - | 57 | - |
| 30 | 750 | - | - | 96 | 73 |

ECHCO = *Echinochloa colonum* (junglerice)
ISCRU = *Ischaemum rugosum* (saramollagrass)
Obs = Observed results
Ex = Expected resultsgai/ha = grams of active ingredient per hectare

Table 3. Synergistic grass weed control at 206 days after application from Penoxsulam + Pendimethalin applied preemergence to perennial tree crops - Field trials.

| | | % Control | |
|---|---|---|---|
| Application Rate (gai/ha) | | ALOMY | |
| Penoxsulam | Pendimethalin | Obs | *Ex* |
| 10 | 0 | 0 | - |
| 0 | 500 | 0 | - |
| 10 | 500 | 63 | *0* |
| 20 | 0 | 20 | - |
| 0 | 500 | 0 | - |
| 20 | 500 | 82 | *20* |
| 30 | 0 | 43 | - |
| 0 | 500 | 0 | - |
| 30 | 500 | 84 | *43* |
| 10 | 0 | 0 | - |
| 0 | 1000 | 7 | - |
| 10 | 1000 | 87 | *7* |
| 20 | 0 | 20 | - |
| 0 | 1000 | 7 | - |
| 20 | 1000 | 94 | *25* |
| 30 | 0 | 43 | - |
| 0 | 1000 | 7 | - |
| 30 | 1000 | 97 | *47* |
| 40 | 0 | 50 | - |
| 0 | 1000 | 7 | - |
| 40 | 1000 | 95 | *53* |
| ALOMY = *Alopecurus myosuroides* (blackgrass)<br>Obs = Observed results<br>Ex = Expected results<br>gai/ha = grams of active ingredient per hectare | | | |

**Claims**

1. A synergistic herbicidal composition consisting of a herbicidally effective amount of (a) penoxsulam and (b) pendimethalin and optionally at least one agriculturally acceptable adjuvant or carrier; one or more surface-active agents; herbicide safeners; plant growth regulants; fungicides; insecticides, wherein the weight ratio of pendimethalin to penoxsulam on an active ingredient (ai) basis is between 320:1 and 5:1.

2. The composition of claim 1, wherein the weight ratio of pendimethalin to penoxsulam on an active ingredient (ai) basis is 55:1.

3. The composition of claim 1, further comprising an agriculturally acceptable adjuvant or carrier.

4. A method of controlling undesirable vegetation which comprises contacting the vegetation or the locus thereof with a herbicidally effective amount the composition of claim 1.

5. The method of claim 4, wherein the composition is applied at an application rate between 160 gai/ha and 1850 gai/ha.

6. The method of claim 4, wherein the composition is applied at an application rate between 760 gai/ha and 1800 gai/ha.

7. The method of claim 4, wherein the pendimethalin is applied at a rate between 150 gai/ha and 1500 gai/ha and the penoxsulam is applied at a rate between 10 gai/ha and 50 gai/ha.

8. The method of claim 4, wherein the undesirable vegetation is alligator weed, morning glory, coffeeweed, junglerice, saramollagrass, or blackgrass.

9. A method of controlling undesirable vegetation in a crop, comprising contacting the vegetation or the locus thereof with a herbicidally effective amount the composition of claim 1, wherein the crop is rice, cereal, grain, turf, industrial vegetation management (IVM), sugar cane or tree and vine orchard.

10. The method of claim 9 in which the composition of claim 1 is applied preemergence to the undesirable vegetation.

**Patentansprüche**

1. Eine synergistische herbizide Zusammensetzung bestehend aus einer herbizid wirksame Menge von (a) Penoxsulam und (b) Pendimethalin und wahlweise mindestens einem landwirtschaftlich akzeptablen Hilfs- oder Trägerstoff, einem oder mehreren oberflächenaktiven Mitteln, Herbizidsafenern, Regulatoren des Pflanzenwachstums, Fungiziden, Insektiziden, wobei das Gewichtsverhältnis von Pendimethalin zu Penoxsulam auf einer Basis an aktivem Inhaltsstoff (ai) zwischen 320:1 und 5:1 liegt.

2. Die Zusammensetzung gemäß Anspruch 1, wobei das Gewichtsverhältnis von Pendimethalin zu Penoxsulam auf einer Basis an aktivem Inhaltsstoff (ai) 55:1 beträgt.

3. Die Zusammensetzung gemäß Anspruch 1, weiterhin umfassend einen landwirtschaftlich akzeptablen Hilfs- oder Trägerstoff.

4. Ein Verfahren zur Bekämpfung unerwünschter Vegetation, welches das In-Kontakt-Bringen der Vegetation oder des Ortes derselben mit einer herbizid wirksamen Menge der Zusammensetzung gemäß Anspruch 1 umfasst.

5. Das Verfahren gemäß Anspruch 4, wobei die Zusammensetzung in einer Aufwandmenge zwischen 160 gai/ha und 1850 gai/ha angewandt wird.

6. Das Verfahren gemäß Anspruch 4, wobei die Zusammensetzung in einer Aufwandmenge zwischen 760 gai/ha und 1800 gai/ha angewandt wird.

7. Das Verfahren gemäß Anspruch 4, wobei das Pendimethalin in einer Menge zwischen 150 gai/ha und 1500 gai/ha angewandt wird, und das Penoxsulam in einer Menge zwischen 10 gai/ha und 50 gai/ha angewandt wird.

8. Das Verfahren gemäß Anspruch 4, wobei die unerwünschte Vegetation Alligatorkraut, Prunkwinde, *Sesbania exaltata,* Kleine Hühnerhirse, Runzliches Schuppengras oder Acker-Fuchsschwanz ist.

9. Ein Verfahren zur Bekämpfung unerwünschter Vegetation in einer Kultur, umfassend das In-Kontakt-Bringen der Vegetation oder des Ortes derselben mit einer herbizid wirksamen Menge der Zusammensetzung gemäß Anspruch 1, wobei die Kultur Reis, Getreide, Korn, Rasen, industrielles Vegetationsmanagement (IVM), Zuckerrohr oder Obst- und Weingarten ist.

10. Das Verfahren gemäß Anspruch 9, in welchem die Zusammensetzung gemäß Anspruch 1 im Vorlauf auf die unerwünschte Vegetation angewandt wird.

**Revendications**

1. Composition herbicide synergique consistant en une quantité à effet herbicide de (a) pénoxsulame et (b) pendiméthaline et en option au moins un adjuvant ou une substance de support acceptables en agriculture ; un ou plusieurs agent(s) tensioactif(s) ; phytoprotecteur(s) contre les herbicides ; régulateur(s) de croissance végétale ; fongicide(s) ; insecticide(s), dans laquelle le rapport pondéral de la pendiméthaline au pénoxsulame, sur une base des composants actifs (ca), est compris entre 320:1 et 5:1.

**2.** Composition selon la revendication 1, dans laquelle le rapport pondéral de la pendiméthaline au pénoxsulame, sur une base des composants actifs (ca), est de 55:1.

**3.** Composition selon la revendication 1, comprenant en outre un adjuvant ou une substance de support acceptables en agriculture.

**4.** Procédé de lutte contre une végétation indésirable, qui comprend la mise en contact de la végétation ou du lieu où elle pousse avec une quantité à effet herbicide de la composition selon la revendication 1.

**5.** Procédé selon la revendication 4, dans lequel on applique la composition à un taux d'application compris entre 160 g ca/ha et 1 850 g ca/ha.

**6.** Procédé selon la revendication 4, dans lequel on applique la composition à un taux d'application compris entre 760 g ca/ha et 1 800 g ca/ha.

**7.** Procédé selon la revendication 4, dans lequel on applique la pendiméthaline à un taux compris entre 150 g ca/ha et 1 500 g ca/ha et le pénoxsulame à un taux compris entre 10 g ca/ha et 50 g ca/ha.

**8.** Procédé selon la revendication 4, dans lequel la végétation indésirable est l'herbe à alligators, l'ipomée à feuilles de lierre, l'herbe pistache, l'échinochloa des cultures, *Ischaemum rugosum* ou le vulpin des champs.

**9.** Procédé de lutte contre une végétation indésirable dans une culture, comprenant la mise en contact de la végétation ou du lieu où elle pousse avec une quantité à effet herbicide de la composition selon la revendication 1, la culture étant une culture de riz, de céréale, de grains, le gazon, une zone d'aménagement végétal intégré (IVM), une culture de canne à sucre ou un verger ou un vignoble.

**10.** Procédé selon la revendication 9, dans lequel on applique la composition selon la revendication 1 en pré-levée sur la végétation indésirable.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61500784
- US 20060183637 A1


### Non-patent literature cited in the description


- Herbicide Handbook of the Weed Science Society of America. 2007, 429
- The Pesticide Manual. 2009
- McCutcheon's Detergents and Emulsifiers Annual. MC Publishing Corp, 1998
- Encyclopedia of Surfactants. Chemical Publishing Co, 1980, vol. I-III
- **COLBY, S. R.** Calculation of the synergistic and antagonistic response of herbicide combinations. *Weeds,* 1967, vol. 15, 20-22